# EUROPEAN PATENT SPECIFICATION

(11) **EP 2 516 144 B1**
(45) Date of publication and mention of the grant of the patent: **10.09.2014**
(21) Application number: 10807386.7
(22) Date of filing: 10.12.2010
(51) Int. Cl.: B29D 30/04, B60C 7/10, B60C 7/12

(54) **A TYRE ASSEMBLY FOR OFF-ROAD MOTORCYCLE**
REIFENANORDNUNG FÜR GELÄNDEMOTORRAD
ENSEMBLE PNEUMATIQUE POUR MOTOCYCLETTE TOUT TERRAIN

(30) Priority: 21.12.2009 IT MI20092247; 26.03.2010 US 318176 P
(43) Date of publication of application: 31.10.2012
(73) Proprietor: Pirelli Tyre S.p.A., 20126 Milano (IT)
(72) Inventor: CAPRIO, Michela, I-20126 Milano (IT); BRIVIO, Paolo, I-20126 Milano (IT); LEONARDO, Fabiano, CEP - 09111-340 - São Paulo (BR)
(74) Representative: Tansini, Elio Fabrizio
(86) International application number: PCT/IB2010/055716
(87) International publication number: WO 2011/077312

(56) References cited:
- EP-A1- 1 375 197
- EP-A1- 1 859 960
- EP-A2- 0 352 045
- WO-A2-2006/076783
- DE-U1-202006 019 001
- US-A- 1 694 260
- US-A- 4 371 023

## Description

The present invention relates to the motorcycle sector for off-road use and in particular to motorcycles for rally - off-road specialities and to wheels for such off-road motorcycles. In particular, the present invention relates to wheels provided with tyres intended for rally - off-road motorcycles of medium and big displacement (for instance 450 cm³ or higher). and/or high-powered motorcycles (for instance of 70-100 horsepower).

Tyres designed to be mounted on off-road motorcycle wheels, in particular for rally off-road vehicles, are typically used under extreme conditions, with highly differentiated types of ground comprising sandy, rocky and compact grounds and obstacles of various nature.

In rallies, tyres must ensure optimal performance in terms of duration, grip, stability and traction capability on such differentiated grounds, in particular at the high run speeds that are reached and maintained over long stretches.

Typically, off-road tyres are block-shaped, i.e. provided with blocks capable of penetrating into the ground so as to ensure traction power, in particular during acceleration and braking.

US 2008/0245457 discloses a tyre for off-road motorcycles comprising a tread provided with a plurality of blocks comprising an axially outermost shoulder block, a pair of sidewalls and a pair of beads. The shoulder blocks comprise an outer edge corresponding to the edge of the tread band, and a side face extending from the edge of the tread band to a radially internal edge disposed on the tyre sidewall. The side face with an enlarged portion axially widens out towards the outside of the tyre relative to a reference line connecting the tread edge and the axially internal edge, in a cross section including an axis of the tyre, the radial height of the radially inner edge of the side face from the bead base line being in the range of 30 to 50% of the height of the tyre section.

During rallies, punctures that can frequently occur when running on uneven and rough grounds impose times for tyre repair and replacement that are too long for competitors. Most of times these periods of time involve the competitor's retirement from the competition.

Therefore, systems have been developed for preventing or minimising the effects of punctures and/or systems substitutive of the pressurised air for supporting the tyre in operation, even when a puncture occurs.

Among the systems developed for off-road motorcycles, expanded polymers or polymeric foams have been proposed which are inserted for at least partly filling the cavity between the casing and rim, also referred to as "mousses".

These mousses are made following different modalities, by curing and expanding an elastomer for example, so as to obtain a toroid of expanded elastomer having a closed-cell structure with cells of appropriate size. This toroid is inserted between the rim and the tyre before fitting the tyre on said rim, as described in US 20020026973.

According to EP 1914268, the mousses or foams are directly blown into the cavity and expanded therein between the rim and the tyre.

A problem with use of mousses as fillers of the inner cavity between tyre and rim consists in the relatively quick decay in operation of the mousse itself and consequent limited duration of same.

According to the teachings of US 20070114694, the inner unevenness of the toroidal support made of expanded (foamed) cell-like material with closed cells, in terms of distribution and size of the cells for example, involves marked effects on the performance. According to the statements of US 20070114694, for improving the features of this support it is necessary to control the size evolution of the foam during the expansion step, by placing the toroidal support precursor, partly cross-linked, in a furnace for submitting it to expansion and rotating it in a vertical plane.

According to the already mentioned US 20020026973 patent, a drawback of the vulcanisation processes in a mold followed by expansion under atmospheric pressure of the toroidal support consists in producing a relatively thick radially intermediate region having a greater density than the core or centre of the support element. This configuration would be the cause of an increased propagation towards the toroidal support core of the imposed deformations giving rise, as a result, to an increase in the inner heating that can produce the destruction of the toroidal support in relatively short periods of time. To obviate this problem, according to US 20020026973 vulcanisation of the toroidal support precursor dipped in a pressurised fluid bath inside a container is conducted, and the expansion of the toroidal support precursor is carried out, without the latter coming into contact with the container's walls. As stated in US 20020026973, cells substantially of the same diameter and relatively close to each other are obtained and the intermediate layer has lower thickness and density than obtained by the conventional processes.

According to JP 2002-67635, for increasing the duration in operation and resistance to heat of a tyre for motorcycle for road and off-road use, filled with elastomeric foam in the inner cavity, the tyre is provided with a belt obtained by spiral winding and partial overlapping of edges of a ribbon of rubberised textile cords. In this way, according to JP 2002-67635, the impacts transmitted by the tread in the footprint area can be circumferentially dispersed, thus greatly improving the duration of the elastomeric foam.

EP 0352045 discloses a method for filling a tyre comprising the steps of: (i) positioning at least one insert capable of air entrapment into a tyre casing and assembling the insert and the tyre casing onto a wheel rim; (ii) providing a seal between the tyre casing and the wheel rim; (iii) injecting a liquid polymeric filling material into the tyre casing and exhausting air from the tyre casing; and (iv) allowing the polymeric material to cure.

WO2006/076783 describes a system resistant to a puncture for a tyre characterized for being produced in two specific parts.

DE 202006019001 discloses a tyre protection system, e.g. for a car, having a set of hollow chambers, which are gas impermeable and have diameter of 1 millimeter to 5 millimeter. The chambers are spherical or asymmetrical and contain air or a gas, and a foamed enclosure (6) having 3 centimeter to 4 centimeter thickness is provided. The tyre protection system is made of a foam material and has the form of a flat band, which completely encompasses the tyre in the interior and follows the contour of the tyre. termination.

US 1,694,260 describes a durable tyre for motor and other vehicles having a semi-vulcanised rubber core made of two similar annular halves, each of which has recesses or cells coinciding with recesses or cells in the opposed half and positioned transversally of the tread and in staggered relation in plan. A division member is placed between the two halves and has lateral pins adapted to partially enter the opposed recesses in the halves. The cells are filled with air and then the two halves, the division member and the pins are vulcanised.

EP 1 859 960 discloses a safety tyre capable of continuing safety travelling over a required distance even at a puncture state. The safety tyre comprises a tyre/approved rim assembly constructed by assembling the tyre onto the approved rim, a hollow ring-shaped partition wall disposed inside the assembly to define a chamber extending in a circumferential direction along the rim, and thermally expandable hollow particles filled in the chamber and each consisting of a continuous phase of a resin and a closed cell(s). The partition wall is provided with a filter selectively passing only a gas emitted when the hollow particles are thermally expanded.

US 4,371,023 describes an insert for tubeless tires to maintain vehicle control and prevent tyre collapse in the event of puncture or other loss of air pressure. The insert has a toroidal center core of solid material, a foam casing of compressible but resilient foam material annularly surrounding the cylindrical core, and a thin outer flexible shell annularly surrounding the casing.

The Applicant has perceived that in the rally sector, driving the motorcycle at high speed on particularly uneven grounds is the cause of the limited duration in operation of the expanded material (mousse) inserted in the cavity between the tyre and rim of a motorcycle wheel.

In particular, the Applicant has perceived that, while the heat generated in the cyclic deformation work (due to rolling) as well as the impulse deformations (due to the frequent impacts against obstacles) cooperate in causing the mousse decay, during stretches run at high speed the tread typically made of particularly hysteretic blends (relatively high tan delta) contributes to a high degree to reduce the mousse duration by transferring part of the heat generated during rolling, in particular at the blocks, to said mousse.

From the Applicant's experiences in fact it comes out that in the crown portion at the belt, temperatures in the order of 130°C-160°C can be reached when the tyre is submitted to high speeds, an average speed higher than 160 km/h for example, over relatively long stretches (several ten kilometres).

The Applicant has further noticed that the central crown portion is particularly stressed because motorcycles are driven with minimum inclinations even during direction changes. In fact, when rally motorcycles are driven, bending that is characteristic of a drive on asphalt roads is typically avoided. The motorcycle is maintained with a 25°-30° maximum inclination relative to the vertical to the ground and is generally driven at very high speed over long stretches.

The weight that is relatively high for an off-road motorcycle (about 200 kg taking into account the equipment and fuel stocks that are compulsory on board the vehicle during competitions) and the efficiency of a drive substantially devoid of inclinations of the motorcycle, lead the rider to face a change of direction in a different way than when he/she is driving on an asphalt road.

The driver, when coming close to a bend, places the motorcycle with the rear wheel oversteering, accelerates so as to give the traction thrust to the motorcycle's rear wheel while the vehicle is oversteering and countersteers the handlebar. In this manner, the driver utilises the combined effect of the traction thrust supplied by the oversteering rear wheel and the countersteering imposed to the front wheel, to enable the motorcycle to compensate for the side slip and follow the curved trajectory.

Thus the Applicant has been able to understand that the central portion of the tread under the footprint area is cyclically stressed during all types of running and in particular with high frequencies in the straight stretches that are travelled at the maximum speed.

In addition, due to the consistency of the grounds travelled over in rallies, the tyres will tend to slip on the ground, as they must discharge the torque transmitted by the motor on a friable and uneven ground.

This slipping typically takes place in the (tractive) rear tyre because it is frequently under skid conditions (on a bend) and generates longitudinal traction/braking forces (on a straight stretch) by virtue of a relative speed between the contact region of the tread with the ground (footprint area) and the ground itself. The relative speed related to the absolute advancing speed of the motorcycle is referred to as "sliding".

The sliding, in particular for off-road casings and especially on unasphalted roads, takes very high values (up to 10%-15%).

According to the Applicant's experiences, sliding represents a source of heat generation in the region of the footprint area that affects the thermal duration of the mousse, in particular in the rear tyre.

As a result of tests carried out by the Applicant, the sliding cooperates in modifying the thermal profile of the tyre in operation to such an extent that, at its inside, it will tend to concentrate melting/breaking of the mousse in the mousse regions close to the tyre.

Under these conditions the mousse can quickly deteriorate and lose the support features limiting the possibility of running long stretches at high speed and/or limiting the speed that can be maintained in particular during a rally.

In this respect the Applicant has noticed that for prolonging the mousse duration in operation and consequently the duration of the tyres provided with mousse it was not sufficient to modify the polymeric formula of the mousse or the process for obtaining it or also the rigidity of the casing, in order to reduce the deformation imposed to the mousse itself.

In fact the Applicant has noticed that, while it is generally possible to improve the mousse performance by operating on the physico-chemical features of the material or the manufacturing process or by stiffening the tyre, in the most demanding tests, as those involving driving at high speed for long stretches, these mousses deteriorate quickly in spite of the technological engagement lavished on improving them.

The Applicant has found that for prolonging the tyre duration in operation, in particular in case of rear tyres for rallies provided with an inner support of expanded polymeric material or mousse for off-road motorcycles, it is necessary to counteract the increase in temperature of said mousse and in particular it is necessary to counteract the transmission of heat generated at the tyre and imparted to the mousse.

The Applicant has found that it is possible to counteract said temperature increase by circumferentially arranging a thermally insulating and thermostable polymeric layer on either side of the equatorial plane of said tyre, which layer should correspond to an important part of the extension of the crown portion of said tread.

In a first aspect, the invention relates to a method of prolonging the working duration of a tyre for an off-road motorcycle provided with an inner support made of a polymeric expanded material or elastomeric foam, or mousse disposed in the cavity between the tyre and the rim of a wheel for an off-road motorcycle, said tyre comprising:
- at least one carcass structure and a tread band including a plurality of blocks circumferentially spaced apart by transverse grooves disposed at a position radially external to said carcass structure; said method comprising:
- circumferentially arranging a thermally insulating and thermostable polymeric layer to a position radially internal to said tyre, on either side of the equatorial plane, which polymeric layer has an axial extension equal to at least 60% of the extension of the crown portion of said tread in said tyre,
- arranging said elastomeric foam or mousse to a position radially internal to said thermally insulating polymeric layer, wherein said thermally insulating and thermostable polymeric layer is made of a material selected from: silicone rubber, expanded silicone rubber, hydrogenated nitrile-butadiene rubber (HNBR), expanded hydrogenated nitrile-butadiene rubber, polyacrylate rubber (ACM), expanded polyacrylate rubber, ethylene-acrylate rubber (EAM), expanded ethylene-acrylate rubber, fluorocarbon rubber (FKM).

According to a first embodiment, said method comprises:
- providing a rim for an off-road motorcycle wheel;
- providing said tyre;
- providing said foam or mousse;
- providing said thermally insulating and thermostable polymeric layer;
- inserting said thermally insulating and thermostable polymeric layer into the tyre on either side of the equatorial plane;
- inserting said mousse at a position radially internal to said thermally insulating polymeric layer;
- fitting the thus formed tyre assembly on said rim.

In a different embodiment, the method according to the invention comprises:
- inserting the thermally insulating and thermostable polymeric layer into the tyre on either side of the equatorial plane of said tyre;
- fitting the tyre comprising the thermally insulating and thermostable polymeric layer on the rim;
- blowing in a fluid polymer into the cavity formed between the rim and the thermally insulating and thermostable polymeric layer;
- letting said fluid polymer expand inside the cavity so as to form said mousse.

In a second aspect, the invention relates to a wheel for an off-road motorcycle comprising a tyre fitted on a rim, said tyre comprising:
- a reinforcing structure including a carcass structure; and
- a tread band including a plurality of blocks circumferentially spaced apart from each other by transverse grooves;
   said wheel further comprising:
- an elastomeric foam or mousse disposed in the cavity between the tyre and the rim of said wheel;
- a thermally insulating and thermostable polymeric layer having an axial extension equal to at least 60% of the extension of the crown portion of said tread, circumferentially disposed on either side of the equatorial plane of said tyre between said tyre and foam, wherein said thermally insulating and thermostable polymeric layer is made of a material selected from: silicone rubber, expanded silicone rubber, hydrogenated nitrile-butadiene rubber (HNBR), expanded hydrogenated nitrile-butadiene rubber, polyacrylate rubber (ACM), expanded polyacrylate rubber, ethylene-acrylate rubber (EAM), expanded ethylene-acrylate rubber, fluorocarbon rubber (FKM).

In a third aspect, the invention relates to a tyre assembly for wheels of off-road motorcycles, comprising:
- a tyre including:
   · a carcass structure;
   · a tread band including a plurality of blocks circumferentially spaced apart from each other by transverse grooves, applied at a radially external position relative to the carcass structure;
said assembly further comprising:
- a toroidal polymeric foam or mousse disposed at a radially internal position relative to said tyre;
- a thermally insulating and thermostable polymeric layer of an axial extension equal to at least 60% of the extension of the crown portion of said tread, circumferentially disposed on either side of the equatorial plane of said tyre and interposed between
   said tyre and foam, wherein said thermally insulating and thermostable polymeric layer is made of a material selected from: silicone rubber, expanded silicone rubber, hydrogenated nitrile-butadiene rubber (HNBR), expanded hydrogenated nitrile-butadiene rubber, polyacrylate rubber (ACM), expanded polyacrylate rubber, ethylene-acrylate rubber (EAM), expanded ethylene-acrylate rubber, fluorocarbon rubber (FKM).

In particular, the thermally insulating and thermostable polymeric layer reduces the thermal conductivity at the equatorial plane and in the central crown portion of the tread, where heat generation appears to be the greatest and where the effects of sliding (in particular for the rear wheel) are deemed to be most apparent when driving at high speed.

To the aims of the present invention, by the term "thermally insulating" it is intended the ability of a material to absorb heat slowly.

This ability is defined in accordance with the UNI EN ISO 6946 standard by the thermal conductivity coefficient λ. A low thermal conductivity denotes a low propensity of the material to transmit heat.

The thermal conductivity is a characteristic intrinsic to the material and is numerically equal to the heat flux passing through a 1 m² wall of 1 m thickness of said material, when the temperature difference between the wall surfaces is 1 K. The λ parameter is typically greater than 0 and is measured in W/mK.

To the aims of the present invention, by the term "thermostable" it is intended the ability of a material of not deteriorating (melting, burning or breaking, for example); in other words, the ability of not being substantially and macroscopically altered at least until the temperatures that are generated within the tyre, at least until about 160°C, for example.

For the purpose of verifying the thermostability of the thermally insulating and thermostable polymeric layer, thermal analyses can be carried out for measuring a physical quantity of a sample of said insulating layer as a function of temperature, by submitting the sample to a controlled thermal cycle.

Among the typically used thermal analyses, three methods involving the temperature variation as an independent variable are: the thermogravimetric analysis (TG), the differential thermal analysis (DTA) and the differential scanning calorimetry (DSC).

By the thermogravimetric analysis it is measured the mass of a sample on increasing of its temperature. A graph of the mass as a function of temperature enables the thermal stability to be evaluated.

By the differential thermal analysis it is measured the difference between the sample temperature and the temperature of a reference material as a function of temperature, for evaluating the sample thermal stability.

The differential scanning calorimetry (DSC) contemplates measurement of the energy difference (heat supplied) required for maintaining a sample and a reference substance in an isothermal condition when the temperature is caused to linearly change (scanning).

To the aims of the present invention, by the term "block" it is intended a tread portion delimited by consecutive groove, depression or channel portions or by edges of the tread band, in both an axial and a circumferential direction and having length, width and height similar to each other. The expression "similar to each other" referred to length, width and height of the block means that the maximum size is at most equal to 10 times the minimum size.
Also falling within the present definition is the case in which the channel or groove portion delimiting the block has an interruption, i.e. a portion with an important depth reduction, typically of a smaller extension than, or the same extension as, the extension of the channel or groove in question.

To the aims of the present invention, by "crown portion" of the carcass structure of a tyre it is intended the radially external surface portion of the carcass structure corresponding to the tread band. By way of example, the length of the lateral extension of the crown portion of the carcass structure can be identified by the intersection of segments perpendicular to the tread band starting from the axially external corners of the tread band and the radially external surface of the carcass structure.

To the aims of the present invention by "channel" it is intended a groove or a depression of marked width.

To the aims of the present invention, the expression "on either side of the equatorial plane" means that it extends at least at the equatorial plane of the tyre.

The present invention in one or more preferential aspects may comprise one or more of the features hereinafter set out.

Preferably, said thermally insulating polymeric layer is thermostable at least until about 180°C, more preferably at least until about 210°C, most preferably at least until about 250°C.

The thermally insulating and thermostable polymeric layer can be made of an expanded polymeric material.

Preferably, the insulating polymeric layer is made of silicone rubber, more preferably of expanded silicone rubber.

Examples of silicone rubbers are:
- Fluoro Silicone Rubber (FMQ)
- Methyl Silicone Rubber (MQ)
- Methyl Vinyl Silicone Rubber (VMQ)
- Expanded Methyl Vinyl Silicone Rubber (VMQ).

Alternatively, the insulating and thermostable polymeric layer is selected from:
- hydrogenated nitrile-butadiene rubber (HNBR),
- expanded hydrogenated nitrile-butadiene rubber,
- polyacrylate rubber (ACM),
- expanded polyacrylate rubber,
- ethylene-acrylate rubber (EAM),
- expanded ethylene-acrylate rubber,
- fluorocarbon rubber (FKM).

Preferably, said thermally insulating polymeric layer extends substantially symmetric to said equatorial plane of the tyre.

Preferably, said thermally insulating polymeric layer extends over the whole crown portion.

More preferably, said thermally insulating polymeric layer substantially extends over the whole inner surface of said tyre.

Preferably, said thermally insulating and thermostable polymeric layer has a thickness of at least 1 mm. Preferably, said thermally insulating and thermostable polymeric layer has a thickness not exceeding 10 mm.

Preferably, said thermally insulating and thermostable polymeric layer has a thickness included between about 4 mm and about 5 mm.

The mousse can be conveniently made following the known art in the form of a toroidal support (polymeric foam) having a closed-cell structure. For instance, this polymeric foam can be made starting from an elastomeric diene precursor based on butyl rubber.

Preferably the closed cells of the cell-like structure can contain gas at a pressure higher than the atmospheric pressure.

According to some embodiments, the mousse precursor can be made starting from halobutyl rubbers, in particular isoprene isobutylene chlorinated or brominated copolymers; also usable are diene copolymers and alphaolefins, such as ethylene-propylene-diene terpolymers (EPDM), polychloroprene or also a mixture of natural rubber (NR) and polybutadiene (BR).

A pyrolytic material, a compressed gas, a liquefied gas and water can be used as the foaming agent. A material generating gas by cracking is preferred. Examples of this material are dinitrosopentametylene tetramine (DPT), azodicarbonamide (ADCA), paratoluen-sulfonyl hydrazine (TSH) and derivatives thereof that can be used alone or in combination. Nitrogen, air, carbon dioxide and the like can be used as the compressed gas.

Propane, butane, pentane, cyclopropane, cyclobutane, cyclopentane and the like can be used as the liquefied gas.

Preferably, at least some of the blocks of the tread band are disposed in transverse rows.

In a particularly preferred embodiment, the transverse block rows comprise two central blocks (disposed in a central portion of the tread band) and two side blocks (disposed in a shoulder region of the tread band). Each side block is separated from a central block by a longitudinal groove.

Advantageously, the central blocks are separated from each other by a longitudinal groove. In a preferred embodiment, this longitudinal groove has a maximum width in the range of 3 to 8 mm.

Preferably, the tyre comprises at least one belt layer disposed between said carcass structure and tread band.

Preferably, the belt layer at most extends up to a crown portion of the carcass structure placed at about 30% of the extension of a block disposed at an axially outermost position.

Preferably the tread band on the whole has a hollow/solid ratio equal to at least 50%.

To the aims of the present invention by "hollow/solid ratio" of a given portion of the tyre tread band (possibly of the whole tread band) it is intended the ratio between the overall surface of the grooves and/or depressions of the given portion of the tyre tread band (possibly of the whole tread band) and the overall surface of the given portion of tread band (possible of the whole tread band).

The carcass structure is formed with at least two radially superposed crossed plies, each of said plies comprising reinforcing cords.

Advantageously, in such a carcass structure the reinforcing cords of each of said carcass plies can be essentially parallel to each other in each ply and oriented in inclined directions relative to the equatorial plane (X-X) of the tyre in each ply and opposite to the cords of the radially adjacent ply.

Preferably, the reinforcing cords of the carcass plies form an angle included between 35° and 55° relative to the equatorial plane of the tyre.

Preferably, the carcass structure comprises four carcass plies radially superposed on each other.

According to an embodiment of the present invention, said at least one belt layer comprises metal cords.

Preferably, said metal cords are made of steel, more preferably of high-elongation steel.

According to an embodiment, the belt layer is formed with a plurality of windings of at least one strip-like element of rubberised fabric comprising two to five cords.

According to an alternative embodiment, the belt layer is formed with a plurality of windings of a single cord.

The cords can be distributed in the belt layer with a substantially constant density from the equatorial plane to the axially external ends of the belt.

Preferably the density of said cords has a value not exceeding 8 cords/cm at least at a region of predetermined width placed on either side of the equatorial plane (X-X).

Further features and advantages of the present invention will become more apparent from the detailed description of a preferred but not exclusive embodiment of a tyre for motorcycles with a reinforcing structure according to the present invention.

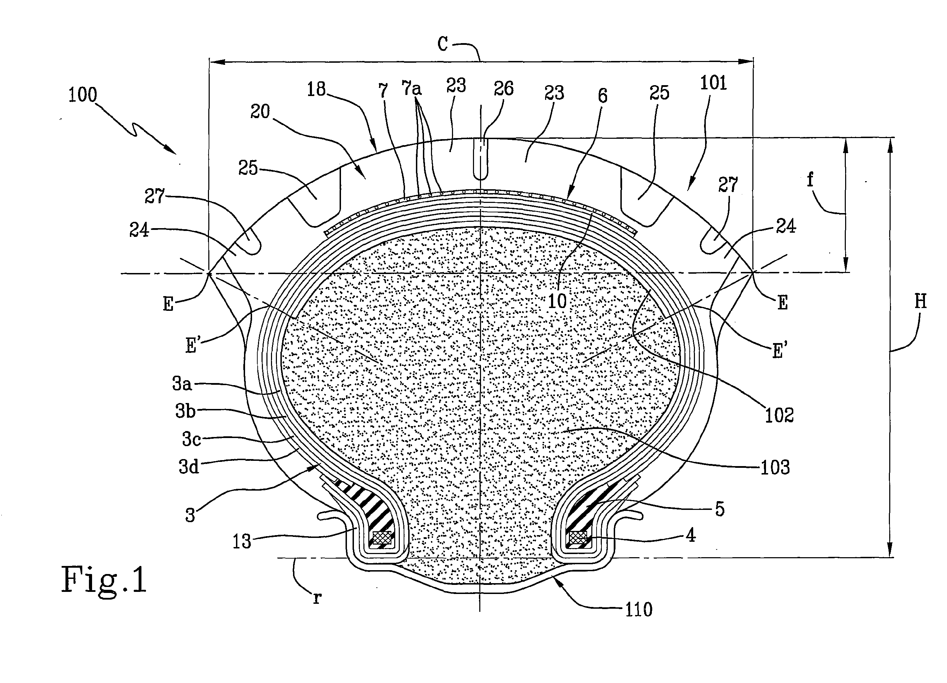

This description will be set out hereinafter with reference to Fig. 1 provided by way of non-limiting example and illustrating a radial section carried out in a plane radial to the rotation axis of a wheel for rally off-road motorcycles provided with a tyre assembly according to the invention.

With reference to Fig. 1, a tyre assembly for motorcycles according to the present invention has been generally denoted at 100, said tyre assembly being in particular intended for being fitted on a rim 110 of a motorcycle of high weight and medium-big displacement of the so-called "rally off-road" type.

The tyre assembly 100 comprises a tyre 101, a thermally insulating polymeric layer 102 circumferentially disposed at a radially internal position relative to said tyre 101 and an expanded polymer or foam or mousse 103 disposed at a radially internal position relative to said thermally insulating polymeric layer.
Tyre 101, by way of example only, is a rear tyre, has a section height H measured in the equatorial plane between the centre of the tread band and the fitting diameter, identified by the reference line r passing through the tyre beads.

Tyre 101 further has a maximum width (or chord) C defined by the distance between the axially outermost points of the tyre itself.

In the example shown in Fig. 1 the width C is defined by the distance between the laterally opposite ends E of the tread.

The tyre has a curvature defined by the particular value of the ratio between the distance f of the centre of the outer tread outline from the line passing through the axial ends E of said tread, measured in the equatorial plane of the tyre, and said width C. The axial ends E of the tread can be formed with a corner.

The motorcycle tyres suitable for off-road use do not have particularly high curvatures. Typically, in this type of tyres the curvature ratio f/C is smaller than or equal to about 0.3 for rear tyres and smaller than or equal to about 0.4 for front tyres.

As to the sidewalls, the invention preferably applies to tyres with relatively high sidewalls. Typically, in this type of tyres the height-to-sidewall ratio (H-f) is equal to at least about 0.5.

Tyre 101 for motorcycles comprises a reinforcing structure including a carcass structure 3 formed with at least two carcass plies. The carcass structure 3 comprises a crown portion and two axially opposite side portions. Each side portion is associated with a respective bead structure, described in the following. By way of example, the crown portion can be identified in Fig. 1 between points E' defined by the perpendicular to the carcass structure 3 and passing through the axial ends E of the tread band.

In the embodiment shown, the carcass structure 3 is made up of four carcass plies 3a, 3b, 3c, 3d radially superposed on each other. Each ply 3a, 3b, 3c, 3d essentially consists of a sheet of elastomeric material incorporating a plurality of reinforcing cords. These reinforcing cords are essentially parallel to each other in each ply and oriented in inclined directions relative to the equatorial plane X-X of tyre 101 in each ply and opposite with respect to the cords of the radially adjacent ply.

At least some of the carcass plies 3a, 3b, 3c, 3d are in engagement, through their opposite circumferential edges, with at least one annular reinforcing structure in the bead region of tyre 101.

In particular, the opposite side edges of the carcass plies 3a and 3b are turned up around annular reinforcing structures referred to as bead cores 4, while the opposite side edges of the carcass plies 3c and 3d stop before coming close to said bead cores 4.

In the preferred embodiment shown in Fig. 1, the opposite side edges of the carcass plies 3a turned up around annular reinforcing structures extend beyond 40% of the sidewall height of tyre 101.
For increasing the structural homogeneity of tyre 101, the carcass plies 3a, 3b, 3c, 3d have the lengths of their axial extension different from each other.

A tapered elastomeric filler 4 is applied to the radially external peripheral edge of the bead cores 4 and it takes up the space defined by the turned-up ply portion.

The tyre region comprising the bead core 4 and elastomeric filler 5 forms the so-called bead, intended for anchoring of the tyre on a corresponding mounting rim, not shown.

In an alternative embodiment not shown, the carcass ply has its opposite side edges interposed without being turned up between a plurality of annular reinforcing structures disposed in axial side by side relationship, each provided with lines of annular windings radially overlapping each other. A filler of elastomeric material can be disposed between the lines of annular windings in axial side by side relationship.

In addition, the bead region comprises a strip 13 of an abrasion-proof elastomeric material, at an axially external position relative to the turned-up side edges of the carcass plies.

A belt structure 6 is circumferentially applied onto the carcass structure 3, at a radially external position and circumferentially superposed thereon is the tread band 18 on which, following a molding operation carried out concurrently with curing of the tyre, blocks are typically formed which are separated from each other by longitudinal and/or transverse grooves, channels and/or depressions such disposed as to define a desired tread pattern.

Tyre 101 also comprises a pair of sidewalls laterally applied to said carcass structure 3 on opposite sides.

In addition, the carcass structure 3 is also typically coated with an airtight layer or a so-called "liner" on its inner walls, which liner essentially consists of a layer of elastomeric material impervious to air, adapted to ensure the hermetic seal of the tyre once inflated.

The tread band 18 has such a composition that the band exhibits a single blend on its radially external surface.

The tread band 18 comprises a plurality of blocks projecting from its radially innermost surface. The transverse and/or longitudinal grooves and/or depressions defining the blocks of the tread band 18 preferably (although not necessarily all of them) have a depth of at least 7 mm. In a preferred embodiment of the present invention, the tread band 18 comprises rows of transverse blocks 20 circumferentially spaced apart by transverse channels.

Each row of blocks 20 preferably has four big blocks transversely crossing the tread band from edge to edge. Preferably, each row of blocks 20 has two central blocks 23 and two side blocks 24.

The central blocks 23 are separated from each other by a longitudinal groove 26 substantially disposed along the equatorial plane X-X. Each side block 24 is separated from an adjacent central block 23 by a longitudinal channel 25. Each side block 24 can have a longitudinal groove 27 of reduced depth adapted to divide each block into two sub-blocks.

The reinforcing structure of tyre 101 also comprises a belt structure 6. The belt structure 6 includes at least one layer 7 having a plurality of circumferential windings disposed in axial side by side relationship, formed with a rubberised cord 7a or a strip-like element comprising some rubberised cords 7a (preferably two to five) spirally wound up at a substantially zero angle (typically between 0° and 5°) relative to the equatorial plane X-X of the tyre.

The cords 7a of the belt structure 6 are metallic cords. Preferably, said cords 7a are metallic steel cords of the high-elongation (HE) type. These cords are described in the European Patent EP 0.461.646 in the name of the same Applicant for example, to which please refer for more details. In particular, these high-elongation (HE) metal cords have a load-elongation diagram comprising a curvilinear portion disposed between two substantially rectilinear portions having different inclinations relative to the diagram axis.

In short, these cords 7a can consist for example of a given number of strands, one to five, preferably three and four, each strand being made up of a given number of basic metallic filaments, two to ten, preferably four to seven. The basic filaments typically have a diameter greater than 0.10 mm, preferably included between 0.12 and 0.35 mm. The filaments in the strands and the strands in the cords are helically twisted together, preferably in the same direction, with the same or different winding pitches for the filaments and the strands.

Preferably, these cords 7a are made of steel wires with a carbon content of 0.7% or more. In particular, in a specific specimen prepared by the Applicant, the helical winding of layer 6 is made up of a single cord 7a, known as 3x3x0.20 HE HT, spirally wound up from one extremity of the belt to the other extremity. Said indication defines a metal cord wound in the same direction and made up of three strands, each consisting of three basic wires of a 0.20 mm diameter; the abbreviation HE means "high elongation"; the abbreviation HT stands for "high tensile" steel, i.e. steel with a high carbon content (about 0.8%).

The high elongation (HE) cords to which reference is herein made have an elongation at break of at least 4%, preferably included between 4% and 8%.

In a particularly preferred embodiment the belt structure 6 comprises only one layer 7 of cords 7a disposed at a substantially zero angle relative to the equatorial plane X-X.

The cords 7a of layer 7 preferably are distributed with a substantially constant density from the equatorial plane (X-X) to the axially external ends of the belt structure 6.

Preferably, the density of said cords 7a has a value not exceeding 8 cords/cm at least at a region of predetermined width placed on either side of the equatorial plane (X-X).

Tyre 101 may also comprise a layer of elastomeric material 10 placed between said carcass structure 2 and belt structure 6 formed with said circumferential turns, said layer 10 preferably extending on a surface substantially corresponding to the extension surface of said belt structure 6. Alternatively, said layer 10 extends over a surface larger than the extension surface of the belt structure 6.

In a preferred embodiment, said layer 10 comprises short aramidic fibres, of Kevlar® for example, dispersed in said elastomeric material.

In a further embodiment, the tread band 18 is made following a "cap and base" modality and comprises a radially outermost portion superposed on an underlayer of elastomeric material (not shown in Fig. 1). The underlayer is superposed on the belt structure 6, and preferably extends over a surface substantially corresponding to the extension surface of the radially external portion of the tread band. Alternatively, said underlayer only extends on part of the extension of the radially external portion of the tread band, on opposite side portions of said tread band for example.

The thermally insulating polymeric layer 102 extends internally of the tyre over the whole radially internal circumference thereof. It axially extends over at least 60%, preferably at least about 75%, of the crown portion and at most over the whole inner surface of the tyre, substantially from bead to bead.

According to a preferred embodiment, the thermally insulating polymeric layer 102 extends over the whole crown portion.
The thermally insulating polymeric layer can be inserted into the tyre in contact with the radially innermost surface of the latter, typically the liner, and can be retained by joining its ends through gluing or friction fit of said ends suitably prepared.

Alternatively, the thermally insulating polymeric layer can be assembled to the tyre precursor during the building step.

In a further embodiment, the thermally insulating polymeric layer can be made integral with the mousse before the latter being inserted in the cavity between the rim and tyre.

The mousse or polymeric foam or expanded polymer is conveniently obtained in the form of a toroid the sizes of which are compatible with the cavity between the tyre and rim for which it is intended.

Although the present description refers to a rear tyre, it can also apply to a front tyre, except for the belt structure that in the front tyre typically is not present.

### EXAMPLE

### Integrity test of the mousse in operation

An integrity test of the mousse in operation has been carried out through a track test. The utilised course was 6.3 km long developed on a dirt-patch circuit comprising two substantially rectilinear fast stretches with not a very uneven pattern connected by curvilinear stretches of various nature. The maximum speed reached on the longest rectilinear stretch of the track with the test vehicle used (KTM 690R) was of about 170 km/h.

In said stretch the speed included between 160 km and 170 km/h was maintained for about 60 s for each lap. Subsequently the vehicle was engaged on a connection stretch of medium unevenness. The used motorcycle had a 88 kg front weight, 103 kg rear weight, and an overall weight of 191 kg; the rider weight was 75 kg. The motorcycle was equipped with Scorpion Rally Pirelli tyres: front 90/90-21; rear 140/80-18.
The rim sizes were: front 1.60x21; rear 2.50x18.
Two tests were carried out with a first mousse produced by Pirelli (1 = control test and 2 = invention) and two tests were carried out with a second mousse produced by Michelin (3 = control test and 4 = invention).
Toroidal 18 E/I-R Pirelli mousses with section diameter 340 mm and circumference 2130 mm were used for tests 1 and 2.
For tests 3 and 4, toroidal Desert Michelin mousses with section diameter 345 mm and circumference 2110 mm were used.
Tests 2 and 4 were carried out using the tyre assembly of the invention, obtained by interposing a thermally insulating and thermostable polymeric layer between said tyres and the relative mousses, which layer had the following features:
Expanded methyl-vinyl silicone rubber VMQ from ATAG Milan
   - density: 0.4 - 0.5 g/cm³
   - working temperature: -80; +200°C
   - heat conductivity: 0.07 W/mK
   - shape: 120 mm wide layer, length equal to the inner extension of the tyre in the crown portion, thickness of 4 mm.
The test was performed under good weather conditions, room temperature between 24°C and 28°C; soil temperature between 24°C and 33°C.
The tests were carried out until destruction of the mousse, which was perceived due to the sudden loss of support in the tyre and related difficulty in controlling it, and was ascertained after disassembling of the wheel.
At the end of the test it was found that the tyre assembly according to the invention had shown a 13% increase in the distance that could be run for test 2 of the invention, as compared with the control test 1 (Pirelli mousse) and about a 27% increase for test 4 of the invention as compared with the control test 3 (Michelin mousse).

Also carried out was a comparative dynamic test on roller test bench between a 140/80-18 Scorpion Rally Pirelli tyre provided with E/I-R Pirelli mousse of a 340 mm section diameter and a circumference of 2130 mm (control test)
and a tyre assembly according to the invention comprising:
- a 140/80-18 Scorpion Rally Pirelli tyre;
- a thermally insulating polymeric layer of expanded silicone from ATAG Milan having a length of 2130 mm, width of 120 mm, thickness of 5 mm;
- a 18 E/I-R Pirelli mousse of a 340 mm section diameter and a circumference of 2130 mm.
The test was carried out by fitting the casing on a rim provided with instruments (for detecting deflection); the full wheel thus made up was fastened to a rotating hub provided with translation freedom in the vertical direction.

The wheel provided with casing and mousse (control) or with the tyre assembly according to the invention, was set in rolling, on a so-called roller test bench, a disc of a 1.7 m diameter, at the speed of 170 km/h with a load of 150 kg.
The deflection sensors (rheostats) monitored and recorded the tyre deflection during the test, i.e. the reduction of radius of the wheel carrying the comparison casing or the tyre assembly according to the invention.
A tendency to reduction of the wheel radius during the test showed deflection of said wheel signalling the beginning of decay/melting of the mousse.
At this point the test was interrupted and the kilometres run by the wheel were detected.

At the end of the test it was ascertained that with the tyre assembly according to the invention it was possible to detect an increase of about 20% in the distance that could be run at the maximum speed (considered at 170 km/h).

## Claims

1. A method of prolonging the working duration of a tyre (101) for an off-road motorcycle provided with an inner support made of elastomeric foam or mousse (103), disposed in the cavity between the tyre (101) and the rim (110) of a wheel for an off-road motorcycle, said tyre comprising:
- at least one carcass structure (3) and a tread band (18) including a plurality of blocks (20) circumferentially spaced apart by transverse grooves disposed at a position radially external to said carcass structure (3);
said method comprising:
- circumferentially arranging a thermally insulating and thermostable polymeric layer (102) to a position radially internal to said tyre (101), on either side of the equatorial plane, which polymeric layer (102) has an axial extension equal to at least 60% of the extension of the crown portion of said tread (18) in said tyre (101),
- arranging said elastomeric foam or mousse (103) to a position radially internal to said thermally insulating polymeric layer (102),
wherein said thermally insulating and thermostable polymeric layer (102) is made of a material selected from: silicone rubber, expanded silicone rubber, hydrogenated nitrile-butadiene rubber (HNBR), expanded hydrogenated nitrile-butadiene rubber, polyacrylate rubber (ACM), expanded polyacrylate rubber, ethylene-acrylate rubber (EAM), expanded ethylene-acrylate rubber, fluorocarbon rubber (FKM).

2. A method as claimed in claim 1, wherein said method comprises:
- providing a rim (110) for an off-road motorcycle wheel;
- providing said tyre (101);
- providing said foam (103);
- providing said thermally insulating and thermostable polymeric layer (102);
- inserting said thermally insulating and thermostable polymeric layer (102) into the tyre (101) on either side of the equatorial plane;
- inserting said foam (103) at a position radially internal to said thermally insulating polymeric layer (102);
- fitting the thus formed tyre assembly on said rim (110).

3. A method as claimed in claim 1, wherein said method comprises:
- inserting the thermally insulating and thermostable polymeric layer (102) into the tyre (101) on either side of the equatorial plane of said tyre;
- fitting the tyre (101) comprising the thermally insulating and thermostable polymeric layer (102) on the rim (110);
- blowing in a fluid polymer into the cavity formed between the rim (110) and the thermally insulating and thermostable polymeric layer (102);
- letting said fluid polymer expand inside the cavity so as to form said foam (103).

4. A wheel for an off-road motorcycle comprising a tyre (101) fitted on a rim (110), said tyre comprising:
- a reinforcing structure including a carcass structure (3); and
- a tread band (18) including a plurality of blocks (20) circumferentially spaced apart from each other by transverse grooves;
said wheel further comprising:
- an elastomeric foam or mousse (103) disposed in the cavity between the tyre (101) and the rim (110) of said wheel;
- a thermally insulating and thermostable polymeric layer (102) having an axial extension equal to at least 60% of the extension of the crown portion of said tread (18), circumferentially disposed on either side of the equatorial plane of said tyre (101) between said tyre and foam (103),
wherein said thermally insulating and thermostable polymeric layer (102) is made of a material selected from: silicone rubber, expanded silicone rubber, hydrogenated nitrile-butadiene rubber (HNBR), expanded hydrogenated nitrile-butadiene rubber, polyacrylate rubber (ACM), expanded polyacrylate rubber, ethylene-acrylate rubber (EAM), expanded ethylene-acrylate rubber, fluorocarbon rubber (FKM).

5. A tyre assembly for wheels of off-road motorcycles, comprising:
- a tyre (101) including:
· a carcass structure (3);
· a tread band (18) including a plurality of blocks (20) circumferentially spaced apart from each other by transverse grooves, applied at a radially external position relative to the carcass structure (3);
said assembly further comprising:
- a toroidal polymeric foam or mousse (103) disposed at a radially internal position relative to said tyre (101);
- a thermally insulating and thermostable polymeric layer (102) of an axial extension equal to at least 60% of the extension of the crown portion of said tread (18), circumferentially disposed on either side of the equatorial plane of said tyre (101) and interposed between said tyre and foam (103),
wherein said thermally insulating and thermostable polymeric layer (102) is made of a material selected from: silicone rubber, expanded silicone rubber, hydrogenated nitrile-butadiene rubber (HNBR), expanded hydrogenated nitrile-butadiene rubber, polyacrylate rubber (ACM), expanded polyacrylate rubber, ethylene-acrylate rubber (EAM), expanded ethylene-acrylate rubber, fluorocarbon rubber (FKM).

6. A tyre assembly as claimed in claim 5, wherein said thermally insulating and thermostable polymeric layer (102) has a thermal conductivity (λ) lower than 0.2 (W/mK), defined as a heat flux passing through 1 m² of a 1 m thick wall of said material, when the temperature difference between the wall surfaces is 1 K.

7. A tyre assembly as claimed in claim 5, wherein said thermally insulating and thermostable polymeric layer (102) has a thermal conductivity (λ) lower than 0.1 (W/mK).

8. A tyre assembly as claimed in claim 5, wherein said thermally insulating and thermostable polymeric layer (102) has a thermal conductivity (λ) lower than 0.08 (W/mK).

9. A tyre assembly as claimed in claim 5, wherein said thermally insulating polymeric layer (102) is thermostable at least until about 180°C.

10. A tyre assembly as claimed in claim 5, wherein said thermally insulating polymeric layer (102) is thermostable at least until about 210°C.

11. A tyre assembly as claimed in claim 5, wherein said thermally insulating polymeric layer (102) is thermostable at least until about 250°C.

12. A tyre assembly as claimed in claim 5, wherein said thermally insulating and thermostable polymeric layer (102) is made of expanded methyl-vinyl silicone rubber (VMQ).

13. A tyre assembly as claimed in claim 5, wherein said thermally insulating and thermostable polymeric layer (102) extends substantially symmetric to said equatorial plane of the tyre (101).

14. A tyre assembly as claimed in claim 5, wherein said thermally insulating and thermostable polymeric layer (102) extends over the whole crown portion.

15. A tyre assembly as claimed in claim 5, wherein said thermally insulating and thermostable polymeric layer (102) axially extends over at least 75% of the crown portion.

16. A tyre assembly as claimed in claim 5, wherein said thermally insulating and thermostable polymeric layer (102) substantially extends over the whole inner surface of said tyre (101).

17. A tyre assembly as claimed in claim 5, wherein said thermally insulating and thermostable polymeric layer (102) has a thickness of at least 1 mm.

18. A tyre assembly as claimed in claim 5, wherein said thermally insulating and thermostable polymeric layer (102) has a thickness not exceeding 10 mm.

19. A tyre assembly as claimed in claim 5, wherein said thermally insulating and thermostable polymeric layer (102) has a thickness included between about 4 mm and about 5 mm.

## Patentansprüche

1. Verfahren zum Verlängern der Betriebsdauer eines Reifens (101) für ein Geländemotorrad, der mit einem inneren Träger aus Elastomerschaum oder -mousse (103) versehen ist, welcher im Hohlraum zwischen dem Reifen (101) und der Felge (110) eines Rads für ein Geländemotorrad angeordnet ist, der Reifen umfassend:
- zumindest eine Karkassenstruktur (3) und ein Laufflächenband (18) mit mehreren Blöcken (20), die umfänglich durch Querrillen beabstandet sind, welche an einer Position radial extern zur Karkassenstruktur (3) angeordnet sind;
das Verfahren umfassend:
- umfängliches Anordnen einer wärmeisolierenden und wärmebeständigen Polymerschicht (102) an einer Position radial intern zum Reifen (101) auf beiden Seiten der äquatorialen Ebene, wobei die Polymerschicht (102) eine axiale Ausdehnung gleich zumindest 60% der Ausdehnung des Kronenabschnitts der Lauffläche (18) im Reifen (101) ist,
- Anordnen des Elastomerschaums oder -mousse (103) an einer Position radial intern zur wärmeisolierenden Polymerschicht (102),
wobei die wärmeisolierende und wärmebeständige Polymerschicht (102) aus einem Material hergestellt ist, das ausgewählt ist aus: Silikonkautschuk, geschäumtem Silikonkautschuk, hydriertem Acrylnitrilbutadien-Kautschuk (HNBR), geschäumtem hydriertem Acrylnitrilbutadien-Kautschuk, Polyacrylat-Kautschuk (ACM), geschäumtem Polyacrylat-Kautschuk, Ethylen-Acrylat-Kautschuk (EAM), geschäumtem Ethylen-Acrylat-Kautschuk, Fluor-Kautschuk (FKM).

2. Verfahren nach Anspruch 1, wobei das Verfahren umfasst:
- Vorsehen einer Felge (110) für ein Geländemotorradrad;
- Vorsehen des Reifens (101);
- Vorsehen des Schaums (103);
- Vorsehen der wärmeisolierenden und wärmebeständigen Polymerschicht (102);
- Einführen der wärmeisolierenden und wärmebeständigen Polymerschicht (102) in den Reifen (101) auf beiden Seiten der äquatorialen Ebene;
- Einführen des Schaums (103) an einer Position radial intern zur wärmeisolierenden Polymerschicht (102);
- Montieren der dadurch ausgebildeten Reifenbaugruppe auf der Felge (110).

3. Verfahren nach Anspruch 1, wobei das Verfahren umfasst:
- Einführen der wärmeisolierenden und wärmebeständigen Polymerschicht (102) in den Reifen (101) auf beiden Seiten der äquatorialen Ebene des Reifens;
- Montieren des Reifens (101), der die wärmeisolierende und wärmebeständige Polymerschicht (102) umfasst, auf der Felge (110);
- Einblasen eines Flüssigpolymers in den Hohlraum, der zwischen der Felge (110) und der wärmeisolierenden und wärmebeständigen Polymerschicht (102) ausgebildet ist;
- Aufschäumenlassen des Flüssigpolymers innerhalb des Hohlraums zum Ausbilden des Schaums (103).

4. Rad für ein Geländemotorrad, umfassend einen Reifen (101), der auf einer Felge (110) montiert ist, der Reifen umfassend:
- eine Verstärkungsstruktur mit einer Karkassenstruktur (3); und
- ein Laufflächenband (18) mit mehreren Blöcken (20), die umfänglich durch Querrillen voneinander beabstandet sind;
der Reifen ferner umfassend:
- einen Elastomerschaum oder -mousse (103), der im Hohlraum zwischen dem Reifen (101) und der Felge (110) des Rads angeordnet ist;
- eine wärmeisolierende und wärmebeständige Polymerschicht (102) mit einer axialen Ausdehnung gleich zumindest 60% der Ausdehnung des Kronenabschnitts der Lauffläche (18), umfänglich auf beiden Seiten der äquatorialen Ebene des Reifens (101) zwischen dem Reifen und dem Schaum (103) angeordnet,
wobei die wärmeisolierende und wärmebeständige Polymerschicht (102) aus einem Material hergestellt ist, das ausgewählt ist aus: Silikonkautschuk, geschäumtem Silikonkautschuk, hydriertem Acrylnitrilbutadien-Kautschuk (HNBR), geschäumtem hydriertem Acrylnitrilbutadien-Kautschuk, Polyacrylat-Kautschuk (ACM), geschäumtem Polyacrylat-Kautschuk, Ethylen-Acrylat-Kautschuk (EAM), geschäumtem Ethylen-Acrylat-Kautschuk, Fluor-Kautschuk (FKM).

5. Reifenbaugruppe für Räder von Geländemotorrädern, umfassend:
- einen Reifen (101) mit:
· einer Karkassenstruktur (3),
· einem Laufflächenband (18) mit mehreren Blöcken (20), die umfänglich durch Querrillen voneinander beabstandet sind, die an einer radial externen Position bezüglich der Karkassenstruktur (3) aufgebracht sind;
die Baugruppe ferner umfassend:
- einen torischen Polymerschaum oder -mousse (103), der an einer radial internen Position bezüglich des Reifens (101) angeordnet ist;
- eine wärmeisolierende und wärmebeständige Polymerschicht (102) mit einer Ausdehnung von zumindest 60% der Ausdehnung des Kronenabschnitts der Lauffläche (18), die umfänglich auf beiden Seiten der äquatorialen Ebene des Reifens (101) angeordnet und zwischen dem Reifen und dem Schaum (103) eingeschoben ist,
wobei die wärmeisolierende und wärmebeständige Polymerschicht (102) aus einem Material hergestellt ist, das ausgewählt ist aus: Silikonkautschuk, geschäumtem Silikonkautschuk, hydriertem Acrylnitrilbutadien-Kautschuk (HNBR), geschäumtem hydriertem Acrylnitrilbutadien-Kautschuk, Polyacrylat-Kautschuk (ACM), geschäumtem Polyacrylat-Kautschuk, Ethylen-Acrylat-Kautschuk (EAM), geschäumtem Ethylen-Acrylat-Kautschuk, Fluor-Kautschuk (FKM).

6. Reifenbaugruppe nach Anspruch 5, wobei die wärmeisolierende und wärmebeständige Polymerschicht (102) eine Wärmeleitfähigkeit (λ) unter 0,2 (W/mK) aufweist, die als Wärmefluss definiert ist, der durch 1 m² einer 1 m starken Wand des Materials fließt, wenn der Temperaturunterschied zwischen den Wandflächen 1 K beträgt.

7. Reifenbaugruppe nach Anspruch 5, die wobei wärmeisolierende und wärmebeständige Polymerschicht (102) eine Wärmeleitfähigkeit (λ) unter 0,1 (W/mK) aufweist.

8. Reifenbaugruppe nach Anspruch 5, wobei die wärmeisolierende und wärmebeständige Polymerschicht (102) eine Wärmeleitfähigkeit (λ) unter 0,08 (W/mK) aufweist.

9. Reifenbaugruppe nach Anspruch 5, wobei die wärmeisolierende Polymerschicht (102) zumindest bis ungefähr 180 °C wärmebeständig ist.

10. Reifenbaugruppe nach Anspruch 5, wobei die wärmeisolierende Polymerschicht (102) zumindest bis ungefähr 210 °C wärmebeständig ist.

11. Reifenbaugruppe nach Anspruch 5, wobei die wärmeisolierende Polymerschicht (102) zumindest bis ungefähr 250 °C wärmebeständig ist.

12. Reifenbaugruppe nach Anspruch 5, wobei die wärmeisolierende und wärmebeständige Polymerschicht (102) aus geschäumtem Methyl-Vinyl-Silikon-Kautschuk (VMQ) hergestellt ist.

13. Reifenbaugruppe nach Anspruch 5, wobei die wärmeisolierende und wärmebeständige Polymerschicht (102) im Wesentlichen symmetrisch zur äquatorialen Ebene des Reifens (101) verläuft.

14. Reifenbaugruppe nach Anspruch 5, wobei die wärmeisolierende und wärmebeständige Polymerschicht (102) über den gesamten Kronenabschnitt verläuft.

15. Reifenbaugruppe nach Anspruch 5, wobei die wärmeisolierende und wärmebeständige Polymerschicht (102) axial über zumindest 75% des Kronenabschnitts verläuft.

16. Reifenbaugruppe nach Anspruch 5, wobei die wärmeisolierende und wärmebeständige Polymerschicht (102) im Wesentlichen über die gesamte Innenfläche des Reifens (101) verläuft.

17. Reifenbaugruppe nach Anspruch 5, wobei die wärmeisolierende und wärmebeständige Polymerschicht (102) eine Stärke von zumindest 1 mm aufweist.

18. Reifenbaugruppe nach Anspruch 5, wobei die wärmeisolierende und wärmebeständige Polymerschicht (102) eine Stärke aufweist, die 10 mm nicht übersteigt.

19. Reifenbaugruppe nach Anspruch 5, wobei die wärmeisolierende und wärmebeständige Polymerschicht (102) eine Stärke aufweist, die zwischen ungefähr 4 mm und ungefähr 5 mm beinhaltet ist.

## Revendications

1. Procédé de prolongation de la durée de travail d'un pneu (101) pour un motocycle tout-terrain muni d'un support interne réalisé en un matériau alvéolaire élastomère ou en une mousse élastomère (103), disposé(e) dans la cavité entre le pneu (101) et la jante (110) d'une roue pour une motocycle tout terrain, ledit pneu comprenant :
au moins une structure de carcasse (3) et une bande de roulement (18) comportant une pluralité de blocs (20) espacés de manière circonférentielle par des rainures transversales disposées à une position radialement externe par rapport à ladite structure de carcasse (3) ;
ledit procédé comprenant le fait :
d'agencer de manière circonférentielle une couche polymère thermostable et thermiquement isolante (102) à une position radialement interne par rapport audit pneu (101), de chaque côté du plan équatorial, laquelle couche polymère (102) a une extension axiale égale à au moins 60% de l'extension de la partie de sommet de ladite bande de roulement (18) dans ledit pneu (101),
d'agencer ledit matériau alvéolaire élastomère ou ladite mousse élastomère (103) à une position radialement interne par rapport à ladite couche polymère thermiquement isolante (102),
dans lequel ladite couche polymère thermostable et thermiquement isolante (102) est réalisée en un matériau choisi parmi : le caoutchouc de silicone, le caoutchouc de silicone expansé, le caoutchouc nitrile hydrogéné (HNBR), le caoutchouc nitrile hydrogéné expansé, le caoutchouc de polyacrylate (ACM), le caoutchouc de polyacrylate expansé, le caoutchouc d'éthylène-acrylate (EAM), le caoutchouc d'éthylène-acrylate expansé, le caoutchouc fluorocarboné (FKM).

2. Procédé tel que revendiqué dans la revendication 1, dans lequel ledit procédé comprend le fait :
de fournir une jante (110) pour une roue de motocycle tout terrain ;
de fournir ledit pneu (101) ;
de fournir ledit matériau alvéolaire (103) ;
de fournir ladite couche polymère thermostable et thermiquement isolante (102) ;
d'insérer ladite couche polymère thermostable et thermiquement isolante (102) dans le pneu (101) de chaque côté du plan équatorial ;
d'insérer ledit matériau alvéolaire (103) à une position radialement interne par rapport à ladite couche polymère thermiquement isolante (102) ;
de monter l'ensemble de pneu ainsi formé sur ladite jante (110).

3. Procédé tel que revendiqué dans la revendication 1, dans lequel ledit procédé comprend le fait :
d'insérer la couche polymère thermostable et thermiquement isolante (102) dans le pneu (101) de chaque côté du plan équatorial dudit pneu ;
de monter le pneu (101) comprenant la couche polymère thermostable et thermiquement isolante (102) sur la jante (110) ;
de souffler un polymère fluide dans la cavité formée entre la jante (110) et la couche polymère thermostable et thermiquement isolante (102) ;
de laisser ledit polymère fluide subir une expansion à l'intérieur de la cavité afin de former ledit matériau alvéolaire (103).

4. Roue pour un motocycle tout terrain comprenant un pneu (101) monté sur une jante (110), ledit pneu comprenant :
une structure de renfort comportant une structure de carcasse (3) ; et
une bande de roulement (18) comportant une pluralité de blocs (20) espacés les uns des autres de manière circonférentielle par des rainures transversales ;
ladite roue comprenant en outre :
un matériau alvéolaire élastomère ou une mousse élastomère (103) disposé(e) dans la cavité entre le pneu (101) et la jante (110) de ladite roue ;
une couche polymère thermostable et thermiquement isolante (102) ayant une extension axiale égale à au moins 60% de l'extension de la partie de sommet de ladite bande de roulement (18), disposée de manière circonférentielle de chaque côté du plan équatorial dudit pneu (101) entre ledit pneu et un matériau alvéolaire (103),
dans laquelle ladite couche polymère thermostable et thermiquement isolante (102) est réalisée en un matériau choisi parmi : le caoutchouc de silicone, le caoutchouc de silicone expansé, le caoutchouc nitrile hydrogéné (HNBR), le caoutchouc nitrile hydrogéné expansé, le caoutchouc de polyacrylate (ACM), le caoutchouc de polyacrylate expansé, le caoutchouc d'éthylène-acrylate (EAM), le caoutchouc d'éthylène-acrylate expansé, le caoutchouc fluorocarboné (FKM).

5. Ensemble de pneu pour des roues de motocycles tout terrain, comprenant :
un pneu (101) comportant :
une structure de carcasse (3) ;
une bande de roulement (18) comportant une pluralité de blocs (20) espacés les uns des autres de manière circonférentielle par des rainures transversales, appliquées à une position radialement externe par rapport à la structure de carcasse (3) ;
ledit ensemble comprenant en outre :
un matériau alvéolaire polymère toroïdal ou une mousse polymère toroïdale (103) disposé(e) à une position radialement interne par rapport audit pneu (101) ;
une couche polymère thermostable et thermiquement isolante (102) d'une extension axiale égale à au moins 60% de l'extension de la partie de sommet de ladite bande de roulement (18), disposée de manière circonférentielle de chaque côté du plan équatorial dudit pneu (101) et interposée entre ledit pneu et un matériau alvéolaire (103),
dans lequel ladite couche polymère thermostable et thermiquement isolante (102) est réalisée en un matériau choisi parmi : le caoutchouc de silicone, le caoutchouc de silicone expansé, le caoutchouc nitrile hydrogéné (HNBR), le caoutchouc nitrile hydrogéné expansé, le caoutchouc de polyacrylate (ACM), le caoutchouc de polyacrylate expansé, le caoutchouc d'éthylène-acrylate (EAM), le caoutchouc d'éthylène-acrylate expansé, le caoutchouc fluorocarboné (FKM).

6. Ensemble de pneu tel que revendiqué dans la revendication 5, dans lequel ladite couche polymère thermostable et thermiquement isolante (102) présente une conductivité thermique (λ) inférieure à 0,2 (W/mK), définie comme étant un flux de chaleur passant à travers 1 m² d'une paroi de 1 m d'épaisseur dudit matériau, lorsque la différence de température entre les surfaces de paroi est de 1 K.

7. Ensemble de pneu tel que revendiqué dans la revendication 5, dans lequel ladite couche polymère thermostable et thermiquement isolante (102) présente une conductivité thermique (λ) inférieure à 0,1 (W/mK).

8. Ensemble de pneu tel que revendiqué dans la revendication 5, dans lequel ladite couche polymère thermostable et thermiquement isolante (102) présente une conductivité thermique (λ) inférieure à 0,08 (W/mK).

9. Ensemble de pneu tel que revendiqué dans la revendication 5, dans lequel ladite couche polymère thermiquement isolante (102) est thermostable au moins jusqu'à environ 180°C.

10. Ensemble de pneu tel que revendiqué dans la revendication 5, dans lequel ladite couche polymère thermiquement isolante (102) est thermostable au moins jusqu'à environ 210°C.

11. Ensemble de pneu tel que revendiqué dans la revendication 5, dans lequel ladite couche polymère thermiquement isolante (102) est thermostable au moins jusqu'à environ 250°C.

12. Ensemble de pneu tel que revendiqué dans la revendication 5, dans lequel ladite couche polymère thermostable et thermiquement isolante (102) est réalisée en caoutchouc silicone de méthyle vinyle expansé (VMQ).

13. Ensemble de pneu tel que revendiqué dans la revendication 5, dans lequel ladite couche polymère thermostable et thermiquement isolante (102) s'étend essentiellement de manière symétrique par rapport audit plan équatorial du pneu (101).

14. Ensemble de pneu tel que revendiqué dans la revendication 5, dans lequel ladite couche polymère thermostable et thermiquement isolante (102) s'étend sur toute la partie de sommet.

15. Ensemble de pneu tel que revendiqué dans la revendication 5, dans lequel ladite couche polymère thermostable et thermiquement isolante (102) s'étend axialement sur au moins 75% de la partie de sommet.

16. Ensemble de pneu tel que revendiqué dans la revendication 5, dans lequel ladite couche polymère thermostable et thermiquement isolante (102) s'étend essentiellement sur toute la surface interne dudit pneu (101).

17. Ensemble de pneu tel que revendiqué dans la revendication 5, dans lequel ladite couche polymère thermostable et thermiquement isolante (102) présente une épaisseur d'au moins 1 mm.

18. Ensemble de pneu tel que revendiqué dans la revendication 5, dans lequel ladite couche polymère thermostable et thermiquement isolante (102) présente une épaisseur ne dépassant pas 10 mm.

19. Ensemble de pneu tel que revendiqué dans la revendication 5, dans lequel ladite couche polymère thermostable et thermiquement isolante (102) présente une épaisseur comprise entre environ 4 mm et environ 5 mm.
